# EUROPEAN PATENT SPECIFICATION

(11) **EP 2 881 215 B1**
(45) Date of publication and mention of the grant of the patent: **04.05.2016**
(21) Application number: 14194253.2
(22) Date of filing: 21.11.2014
(51) Int. Cl.: B23K 26/10, B23D 25/04, B23D 21/04, B21C 37/08, B26D 3/16, B26D 1/62

(54) **Orbital cutting machine for tubes**
Orbitale Schneidemaschine für Rohre
Machine de découpe orbitale pour tubes

(30) Priority: 06.12.2013 IT MO20130333
(43) Date of publication of application: 10.06.2015
(73) Proprietor: FIVES OTO S.P.A., 42022 Boretto, Reggio Emilia (IT)
(72) Inventor: Micali, Luciano, 42016 Guastalla (RE) (IT); Anesi, Andrea, 42019 S.Ilario d'Enza (RE) (IT); Vecchini, Gianluca, 43123 PARMA (PR) (IT); Chezzi, Aleardo, 42022 Boretto (RE) (IT)
(74) Representative: Casadei, Giovanni

(56) References cited:
- EP-A1- 0 088 501
- EP-A1- 2 404 691
- DE-A1- 1 800 437
- DE-A1- 4 439 047
- JP-A- S5 981 015
- US-A- 3 771 393
- US-A1- 2004 099 109
- US-A1- 2008 016 696
- US-A1- 2008 202 299

## Description

The present invention relates to an orbital cutting machine for tubes according to the preamble of claim 1 and is in the sector of production of tube lengths, for example downstream of a manufacturing station of a continuous tube starting with a metal sheet bent and welded longitudinally. Such a machine is known from document DE 4439047 A.

Orbital cutting machines for tubes are currently known comprising an annular rotary support through which the tube to be cut passes and supporting one or more cutting heads mounted on the annular support and therefore rotating around the axis of the tube. The cutting heads cut respective parts of the tube during revolving of the cutting heads around the tube axis. Cutting heads of the traditional type comprise, for example, circular blades.

Movement of the blades towards and away from the tube (necessary for an engagement and a disengagement of the blades with respect to the tube) is realised by mounting each cutting head on a respective swinging or translating arm in turn hinged onto the annular support and moved by a respective electric motor. This allows a movement of each cutting head towards and away from the tube along a circular trajectory around the swinging axis of the swinging arm.

However, machines of this type have certain drawbacks.

As the diameter of the tube to be cut changes, in fact, the cutting head assumes different orientations with respect to the tube, as a result of the rotary movement around the swinging axis of the swinging arm. This frequently, and inevitably, causes the cutting head to operate in geometrically incorrect cutting positions, particularly wherein the cutting head is not oriented in the optimal position (which generally corresponds with a perpendicular orientation with respect to the portion of the outer surface of the tube to be cut).

The aforesaid drawback is most greatly felt in cutting tubes with a non-circular cross-section. In this situation, in fact, during rotation of the cutting heads around the tube, the distance between the cutting heads and the outer profile of the tube varies continually and the cutting head therefore operates in continually changing cutting conditions which deviate from the geometrically optimal configuration, resulting in the risk of performing an incorrect cutting action, for example with engagement angles between the cutting tool and the tube which are not optimal.

**Examples of prior art machines are known from documents** DE4439047 **and** US2008/016696**.**

The object of the present invention is therefore to provide an orbital cutting machine for tubes which obviates the drawbacks of the prior art as mentioned above.

In particular, an object of the present invention is providing an orbital cutting machine for tubes which is capable of realising a correct and optimal cutting action on tubes of different diameters.

A further object of the present invention is providing an orbital cutting machine for tubes which is capable of realising a correct and optimal cutting action on tubes with a non-circular cross-section, for example quadrangular or elliptical.

The specified object is fully achieved by an orbital cutting machine for tubes according to independent claim 1, which is characterised by what is contained in the claims set forth below.

The technical characteristics of the invention, according to the aforementioned object, can be clearly seen from the contents of the claims set forth below, and the advantages thereof will more fully emerge from the detailed description which follows, made with reference to the accompanying drawings, which represent a purely exemplary and nonlimiting embodiment thereof, wherein:
- Figure 1 is a front view (along the axis of the tube to be cut) of the machine of Figure 1;
- Figure 2 is a sectional view, according to the horizontal plane III-III of Figure 1.
- Figure 3 is a detail of the machine of figure 1.

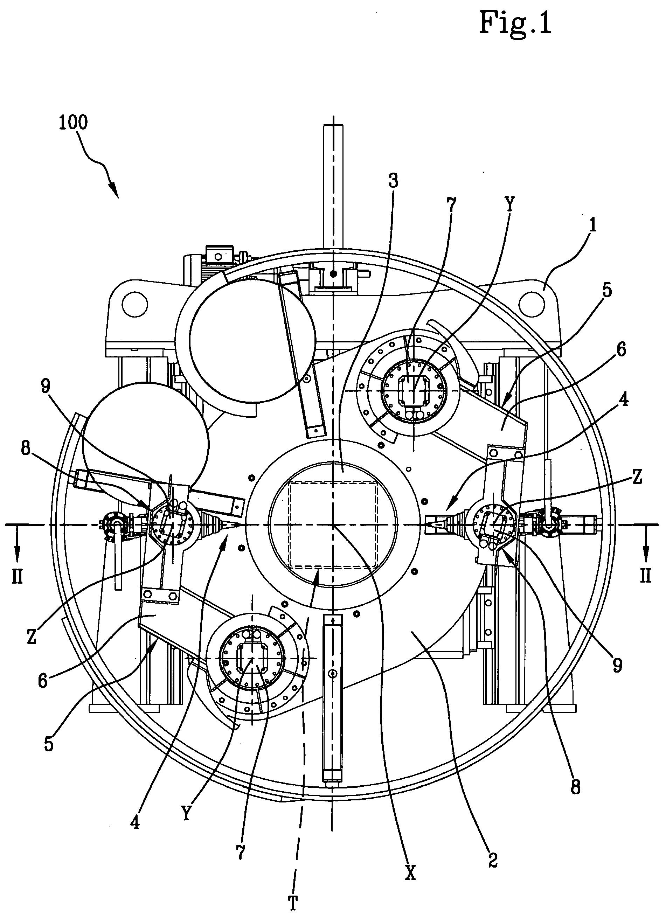

In accordance with the attached drawings, the number 1 denotes in its entirety an orbital cutting machine for tubes (indicated with "T" in figures 1-3). Figures 1-3 (which represent a virtual processing condition) simultaneously show different types of tubes "T" adapted to be processed by the machine 1, and having different cross-sections to each other: tubes with a circular, quadrangular and rectangular cross-section. The tubes which may be processed by the machine 1 may nonetheless have further shapes not shown, for example elliptical or generally polygonal.

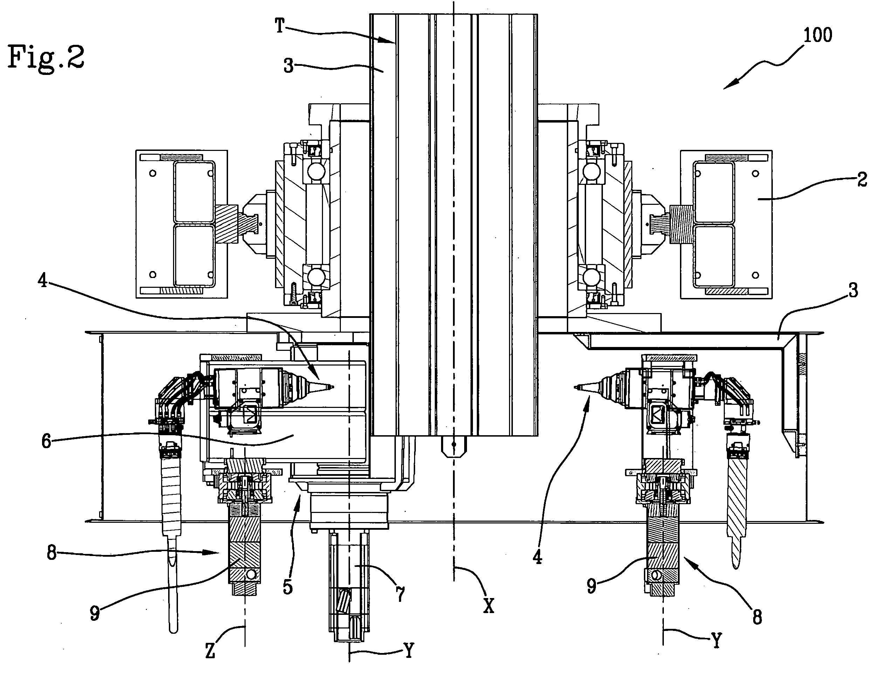

As visible in figures 1 and 2, the machine 100 comprises a frame 1 on which is mounted a support 2 rotating around an axis "X", preferably horizontal, and substantially coinciding with a direction of advance of the tubes "T" and preferably coinciding with the longitudinal axes of the advancing tubes "T". The support 2 rotates in a known way and therefore the means to place the rotating support in rotation will not be described further.

In the embodiment shown, the support 2 has an annular shape, extending along a closed line, having a pass-through opening 3 arranged centrally through which the tubes "T" being processed transit. The opening 3 has a preferably circular shape, but could also have different shapes.

At least one cutting head 4 is mounted on the rotary support 2, mobile in revolution around the longitudinal axis "X". Preferably, the support 2 is provided with two cutting heads 4, which may be identical to each other, which are simultaneously rotating in the same direction according to a revolving movement around the longitudinal axis "X". The two cutting heads 4 are preferably arranged in a diametrically opposing position with respect to the longitudinal axis "X".

Each cutting head 4 comprises a cutting tool which, in the preferred embodiment, comprises a laser. Alternatively, other types of cutting tool could be provided, for example plasma or water cutting heads or, in any case, more generally, cutting heads using technologies which do not require physical contact between the cutting head and the tube.

The cutting heads 4 are mobile towards and away from the longitudinal axis X. This is obtained by means of a pair of movement organs 5, applied on the support 2 and each of which operating on a respective cutting head 4 to move it towards and away from the longitudinal axis X. Preferably, each movement organ directly supports the respective cutting head 4. The movement organs are therefore also mobile according to a revolving movement around the longitudinal axis "X".

The cutting heads, on the other hand, are mobile according to two distinct movements, the aforesaid revolving movement around the longitudinal axis "X" imparted by the rotary support 2 (defined by the revolving movement of the movement organs 5) and the relative movement with respect to the rotary support 2 imparted by the movement organs 5.

The movement organs 5 are also preferably arranged in a diametrically opposing position with respect to the longitudinal axis "X".

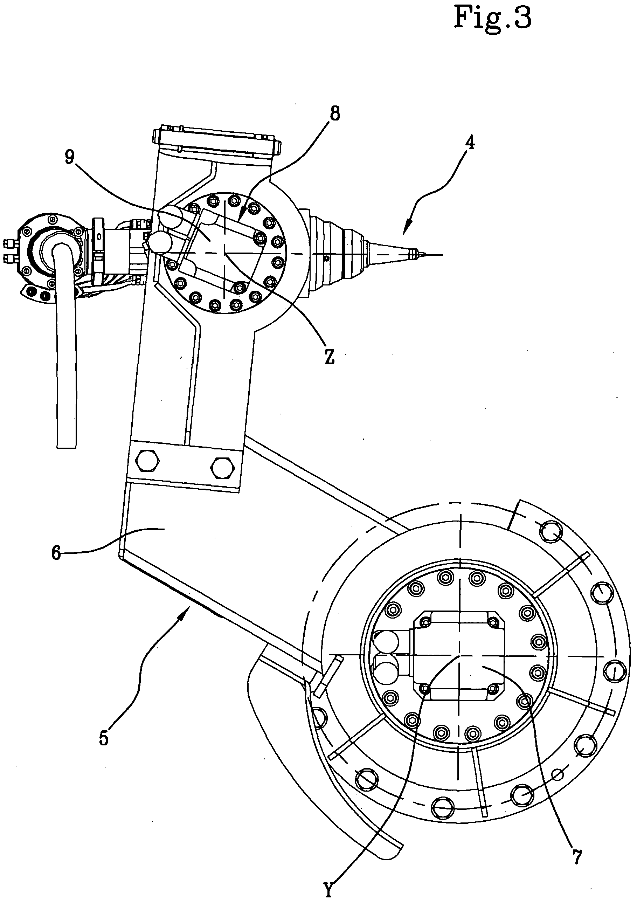

In the embodiment shown, and visible in detail in figure 3, each movement organ 5 comprises a swinging arm 6 hinged (for example, at a first one of its ends) to the rotary support 2 and therefore mobile according to a swinging movement around a respective axis "Y". In the embodiment shown, the swinging arm 6 has an elbow shape, but could nonetheless have a different shape.

Each cutting head 4 is applied to a respective one of said swinging arms 6 in an eccentric position with respect to a swinging axis "Y" (for example, at the opposite end to the one hinged to the rotary support 2) so that swinging of the swinging arm 6 causes a movement of the respective cutting head 4 towards and away from the longitudinal axis "X".

The movement of the swinging arms 6 with respect to the swinging axes "Y" is imparted by a pair of electric motors 7, each associated with a respective swinging arm 6. The aforesaid electric motors 7 of movement of the rotating arms are preferably coaxial to the respective swinging axes "Y".

In the present description, the word "swinging" is intended as a rotating movement around the swinging axis "Y" with an amplitude which is pre-set and lower than a pre-established value. Therefore, swinging of the arms 6 is not necessarily to be intended as an actual continuous and alternate movement, but a positioning movement which may serve, for example, to bring the cutting heads 4 close to the tube "T" having a reduced diameter or having the cutting heads 4 which follow (with a movement which may be continuous) a trajectory which substantially traces the outer profile of a non-circular tube "T".

The swinging axis "Y" is preferably parallel to the aforementioned longitudinal axis "X" (figure 3). However, the swinging axis "Y" could also be differently oriented, provided it is adapted to allow a movement of the respective cutting head 4 towards and away from the longitudinal axis "X" following swinging of the swinging arm 6 around the relative swinging axis "Y".

Each cutting head 4 is mounted on the respective movement organ 6 in an adjustable way at least around a respective adjustment axis "Z". Therefore, the cutting heads 4 are also mobile according to a third additional movement with respect to the two previously described (revolution around the longitudinal axis "X" and relative with respect to the rotary support 2).

Preferably, the adjustment axis "Z" is parallel to the longitudinal axis "X" and is maintained as such since the swinging axis "Y" is also parallel to the longitudinal axis "X" (figure 3).

Alternatively, the adjustment axis "Z" may also assume different orientations, provided they are adapted to allow, independently of the orientation assumed by the swinging arm 6 around the respective swinging axis "Y", a change in the orientation of the cutting head 5 with respect to the tube "T" being processed, preferably adapted to allow the cutting head 5 always to assume a perpendicular orientation to the outer surface of the tube "T" (to the portion thereof being cut).

The movement of each cutting head 4 with respect to the respective swinging arm 6, around the respective adjustment axis "Z", is obtained through use of respective motorised adjustment means 8, associated with the cutting heads 4 and comprising, for example, respective electric motors, each of which associated with a respective cutting head 4.

The mentioned electric motors 9 of movement of the cutting heads 4 around the adjustment axes "Z" are preferably coaxial to the respective adjustment axes "Z".

Preferably, each cutting head (4) is orientable with respect to the respective swinging arm 6 for an angular excursion between 60 and -60 degrees, preferably comprised between 40 and -40 degrees, around the respective adjustment axis "Z".

In the embodiment shown, each cutting head 4 is mounted on the respective swinging arm 6 in an adjustable way exclusively around the respective adjustment axis "Z". According to different embodiments not shown, however, each cutting head 4 could be mounted on the respective swinging arm 6 in an adjustable way also along other directions and with additional degrees of freedom (for example, translation, or the like).

In accordance with the invention, the machine 1 according to the invention further comprises a control unit (not shown) acting on the movement means 5 and on the adjustment means 8 and configured to activate the movement means 5 and the adjustment means 8 (for example, in a simultaneous or combined way), so as to maintain constant the relative orientation between each cutting head 4 and the portion of the outer surface of the tube "T" to be cut during revolving of the cutting heads 4 around the longitudinal axis (X).

Preferably, said orientation conferred on the cutting heads 4 by the control unit during revolving around the longitudinal axis "X" is a perpendicular orientation to the mentioned portion of the surface of the tube "T" on which the cutting head 4 acts.

The present invention is susceptible to variations nonetheless all falling within the scope of the invented concept described above.

Although reference is made to an embodiment comprising two cutting heads 4, an embodiment is also provided in which one single cutting head 4 is associated with the rotary support 2.

Furthermore, the rotary support 2 could not have an annular shape, but other shapes, provided they have a pass-through opening for advance of the tubes "T" and adapted to support at least one pair of cutting heads 4 in a diametrically opposed reciprocal position with respect to the longitudinal axis "X" and to place the cutting heads 4 in revolution around said axis "X".

However, the annular shape of the rotary support 2 could nonetheless be preferable for reasons of structural rigidity.

Furthermore, the support 2 could not be rotary but could support, in a rotating manner around the longitudinal axis "X", support trolleys of the cutting heads 4 and the respective movement means 5 and adjustment means 8.

The cutting heads 4 could also be more than two, diametrically opposed in pairs or angularly equidistant from each other, or there could be one single cutting head 4.

The present invention achieves the proposed objects, overcoming the disadvantages complained of in the known art.

Adjustability of the position of the cutting heads with respect to the movement means does, in fact, allow the cutting heads always to be arranged in the optimal orientation with respect to the outer surface of the tube to be cut, independently of the position assumed by the movement means. The movement means, in fact, especially in the embodiment with swinging arms, determine rotation of the cutting heads of an angle equal to the swinging angle of said arms. In the case of a change in diameter of the tube to be cut or in the case of tubes with non-circular cross-sections, this determines a non-optimal position of the cutting heads, which would be sloped with respect to the optimal position with reference to the tube.

This problem is particularly marked in the case of laser cutting heads, or other similar systems, wherein the tool does not have axial symmetry and therefore a non-perpendicular orientation of the tool with respect to the surface of the tube introduces cutting problems, for example linked to a greater thickness of material perceived by the leaser beam during cutting and therefore a longer cutting time and higher consumption of energy.

This problem is also present in the case of use of cutting heads with a circular blade, since, when the orientation deviates from the optimal one, an insufficient thrust would be exerted in the cutting zone.

Use of the control unit according to the invention also allows the cutting head tool to follow the desired trajectory maintaining the tool in the desired orientation, with simultaneous control of the adjustment means and the movement means, therefore during cutting of tubes with non-circular cross-section the tool follows a trajectory and receives an orientation which, in each point of the surface to be cut, are always optimal.

## Claims

1. An orbital cutting machine for tubes, comprising:
- a support (2) developing around a longitudinal axis (X) and presenting a through opening (3), arranged on said longitudinal axis (X) and through which a tube to be cut (T) may be advanced;
- at least one cutting head (4);
- at least one movement organ (5) applied to said support (2) and supporting the cutting head (4), said movement organ (5) being movable in accordance with a revolving movement around said longitudinal axis (X) and being configured to move the cutting head (4) towards and away from said longitudinal axis (X);
the cutting head (4) being mounted on the movement organ (5) in an adjustable way at least around an adjustment axis (Z); and
- motorised adjustment means (8) associated with the cutting head (4) to realise an adjusting movement of the cutting head (4) with respect to the movement organ (5) around said adjustment axis (Z);
**characterised in that** the machine further comprises a control unit active on the movement organ (5) and on the adjusting means (8) and configured to activate said movement organ (5) and said adjusting means (8) so as to maintain the relative orientation constant, preferably a perpendicular orientation, between the cutting head (4) and an outer surface of the tube (T) to be cut inserted in said through opening (3) of the support (2) during a revolution of the cutting head (4) around said longitudinal axis (X).

2. The machine according to claim 1, wherein said adjustment axis (Z) is parallel to said longitudinal axis (X).

3. The machine according to any one of the previous claims, wherein the cutting head (4) is orientable with respect to the movement organ (5) for an angular excursion comprised between 60 and -60 degrees, preferably between 40 and -40 degrees, around the respective adjustment axis (Z).

4. The machine according to any one of the previous claims, wherein the cutting head (4) is mounted on the movement organ (5) in an adjustable way exclusively around said adjustment axis (Z).

5. The machine according to any one of the previous claims, wherein the movement organ (5) comprises a swinging arm (6) movable in accordance with a swinging movement around a swinging axis (Y) and wherein the cutting head (4) is applied to a swinging arm (6) in an eccentric position with respect to the swinging axis (Y).

6. The machine according to claim 5, wherein the swinging axis (Y) is parallel to said longitudinal axis (X).

7. The machine according to any one of the previous claims, wherein said support (2) is rotatable around said longitudinal axis (X) to move the movement organ (5) and the cutting head (4) according to a rotation of revolution around said longitudinal axis (X).

8. The machine according to any one of the previous claims, wherein said cutting head (4) is a laser cutting head.

9. The machine according to any one of the previous claims, comprising two cutting heads (4) arranged on said support (2) in a position diametrically opposite each other with respect to the longitudinal axis (X).

## Patentansprüche

1. Orbitale Schneidemaschine für Rohre, umfassend:
- eine Halterung (2), die sich rund um eine Längsachse (X) entwickelt und eine Durchführungsöffnung (3) aufweist, angeordnet an der Längsachse (X), durch die ein zu schneidendes Rohr (T) vorgeschoben werden kann;
- mindestens einen Schneidkopf (4);
- mindestens ein Bewegungsorgan (5), angebracht an der Halterung (2) und stützend den Schneidkopf (4), wobei das Bewegungsorgan (5) nach einer umlaufenden Bewegung rund um die Längsachse (X) bewegbar und ausgelegt ist, um den Schneidkopf (4) hinführend zur und wegführend von der Längsachse (X) zu bewegen;
wobei der Schneidkopf (4) auf dem Bewegungsorgan (5) auf verstellbare Weise mindestens rund um eine Verstellachse (Z) montiert ist, und
- motorisierte Verstellmittel (8), die mit dem Schneidkopf (4) verbunden sind, um eine Verstellbewegung des Schneidkopfs (4) zum Bewegungsorgan (5) rund um die Verstellachse (Z) zu realisieren, **dadurch gekennzeichnet, dass** die Maschine zudem eine Steuereinheit umfasst, die auf das Bewegungsorgan (5) und die Verstellmittel (8) wirkt und ausgelegt ist, um das Bewegungsorgan (5) und die Verstellmittel (8) zu aktivieren, sodass die relative Ausrichtung konstant beibehalten wird, vorzugsweise eine senkrechte Ausrichtung, und zwar zwischen dem Schneidkopf (4) und einer äußeren Oberfläche des zu schneidenden Rohrs (T), das in die Durchführungsöffnung (3) der Halterung (2) während einer Umdrehung des Schneidkopfs (4) rund um die Längsachse (X) eingefügt wird.

2. Maschine nach Anspruch 1, wobei die Verstellachse (Z) parallel zur Längsachse (X) angeordnet ist.

3. Maschine nach einem der vorhergehenden Ansprüche, wobei der Schneidkopf (4) zum Bewegungsorgan (5) ausgerichtet werden kann um eine Winkelauslenkung zwischen 60 und -60 Grad, vorzugsweise zwischen 40 und -40 Grad, rund um die jeweilige Verstellachse (Z).

4. Maschine nach einem der vorhergehenden Ansprüche, wobei der Schneidkopf (4) auf dem Bewegungsorgan (5) auf eine verstellbare Weise ausschließlich rund um die Verstellachse (Z) montiert ist.

5. Maschine nach einem der vorhergehenden Ansprüche, wobei das Bewegungsorgan (5) einen Schwingarm (6) umfasst, der nach einer Schwingbewegung rund um eine Schwingachse (Y) bewegbar ist, wobei der Schneidkopf (4) an einem Schwingarm (6) in einer außermittigen Position zur Schwingachse (Y) angebracht ist.

6. Maschine nach Anspruch 5, wobei die Schwingachse (Y) parallel zur Längsachse (X) verläuft.

7. Maschine nach einem der vorhergehenden Ansprüche, wobei die Halterung (2) rund um die Längsachse (X) drehbar ist, um das Bewegungsorgan (5) und den Schneidkopf (4) nach einer Umdrehungsrotation rund um die Längsachse (X) zu bewegen.

8. Maschine nach einem der vorhergehenden Ansprüche, wobei der Schneidkopf (4) ein Laserschneidkopf ist.

9. Maschine nach einem der vorhergehenden Ansprüche, umfassend zwei Schneidköpfe (4), die auf der Halterung (2) in einer diametral entgegengesetzten Position zueinander zur Längsachse (X) angeordnet sind.

## Revendications

1. Machine de découpe orbitale pour tubes, comprenant :
- un support (2) se développant autour d'un axe longitudinal (X) et présentant une ouverture passante (3) disposée sur ledit axe longitudinal (X) et à travers laquelle un tube à couper (T) peut être avancé ;
- au moins une tête de découpe (4) ;
- au moins un élément de déplacement (5) appliqué au dit support (2) et supportant la tête de découpe (4), ledit élément de déplacement (5) étant mobile selon un mouvement de rotation autour dudit axe longitudinal (X) et étant configuré pour déplacer la tête de découpe (4) de manière à la rapprocher ou à l'éloigner dudit axe longitudinal (X) ;
la tête de découpe (4) étant montée sur l'élément de déplacement (5) de façon réglable au moins autour d'un axe de réglage (Z) ; et
- des moyens de réglage motorisés (8) associés à la tête de découpe (4) pour réaliser un mouvement de réglage de la tête de découpe (4) par rapport à l'élément de déplacement (5) autour dudit axe de réglage (Z) ; **caractérisée en ce que** la machine comprend de plus une unité de commande active sur l'élément de déplacement (5) et sur les moyens de réglage (8) et configurée pour activer ledit élément de déplacement (5) et lesdits moyens de réglage (8) de sorte à maintenir constante l'orientation relative, de préférence une orientation perpendiculaire, entre la tête de découpe (4) et une surface externe du tube (T) à couper inséré dans ladite ouverture passante (3) du support (2) lors d'une révolution de la tête de découpe (4) autour dudit axe longitudinal (X).

2. Machine selon la revendication 1, dans laquelle ledit axe de réglage (Z) est parallèle au dit axe longitudinal (X).

3. Machine selon l'une quelconque des revendications précédentes, dans laquelle la tête de découpe (4) est orientable par rapport à l'élément de déplacement (5) selon une excursion angulaire comprise entre 60 et -60 degrés, de préférence entre 40 et -40 degrés, autour de l'axe de réglage respectif (Z).

4. Machine selon l'une quelconque des revendications précédentes, dans laquelle la tête de découpe (4) est montée sur l'élément de déplacement (5) de façon réglable exclusivement autour dudit axe de réglage (Z).

5. Machine selon l'une quelconque des revendications précédentes, dans laquelle l'élément de déplacement (5) comprend un bras oscillant (6) mobile selon un mouvement oscillant autour d'un axe d'oscillation (Y) et dans laquelle la tête de découpe (4) est appliquée à un bras oscillant (6) dans une position excentrique par rapport à l'axe d'oscillation (Y).

6. Machine selon la revendication 5, dans laquelle l'axe d'oscillation (Y) est parallèle au dit axe longitudinal (X).

7. Machine selon l'une quelconque des revendications précédentes, dans laquelle ledit support (2) est pivotant autour dudit axe longitudinal (X) pour déplacer l'élément de déplacement (5) et la tête de découpe (4) selon une rotation de révolution autour dudit axe longitudinal (X).

8. Machine selon l'une quelconque des revendications précédentes, dans laquelle ladite tête de découpe (4) est une tête de découpe laser.

9. Machine selon l'une quelconque des revendications précédentes, comprenant deux têtes de découpe (4) disposées sur ledit support (2) dans une position diamétralement opposées l'une à l'autre par rapport à l'axe longitudinal (X).
